# EUROPEAN PATENT SPECIFICATION

(11) **EP 2 194 778 B1**
(45) Date of publication and mention of the grant of the patent: **18.01.2017**
(21) Application number: 08788299.9
(22) Date of filing: 13.08.2008
(51) Int. Cl.: A01N 25/02

(54) **IMPROVEMENTS IN OR RELATING TO ORGANIC COMPOUNDS**
VERBESSERUNG IN ODER IM ZUSAMMENHANG MIT ORGANISCHEN VERBINDUNGEN
AMELIORATIONS RELATIVES A DES COMPOSES ORGANIQUES

(30) Priority: 24.08.2007 GB 0716592
(43) Date of publication of application: 16.06.2010
(73) Proprietor: Syngenta Limited, Guildford, Surrey GU2 7YH (GB)
(72) Inventor: BELL, Gordon, Alastair, Berkshire RG42 6EY (GB); HARRIS, Clair, Louise, Berkshire RG42 6EY (GB); TOVEY, Ian, David, Berkshire RG42 6EY (GB)
(74) Representative: Syngenta International AG
(86) International application number: PCT/GB2008/002730
(87) International publication number: WO 2009/027624

(56) References cited:
- WO-A-2007/107745
- WO-A-2008/101620
- DE-A1- 4 112 873
- DE-A1- 4 130 189

## Description

This invention relates to compositions, particularly for agrochemical use, comprising certain lactamides and biologically active compounds, and to methods of making and using such compositions. In particular the present invention relates to such compositions when formulated as, or comprised by, an emulsion concentrate (EC).

An agrochemical (fungicidal) composition comprising dimethyl lactamide and triforine is disclosed in DE 41 12 873 A1.

Certain lactamides are disclosed in Ratchford, W. P. and Fisher, C. H., Journal of Organic Chemistry, 1950, 15, 317-325; Ratchford, W. P., Journal of Organic Chemistry, 1950, 15, 326-332; Fein, M.L. and Filachione, E.M., Journal of the American Chemical Society, 1953, 75, 2097-2099; and US 4,143,159.

Nowadays, the Formulation Chemist is required to address a number of environmental criteria when developing new formulations. Ideally, a suitable solvent will display many or all of the following properties: an excellent dissolving power for pesticides or other biologically active compounds; made from plant or animal renewable resources; low skin irritation; an ability to reduce the skin irritation associated with aggressive formulation components, such as sodium lauryl sulphate; low ecotoxicity, for example to daphnia; low volatile organic content; and a high flash point. The compositions of the present invention comprise a solvent which displays all or many of these attractive properties.

However, not all solvents are equal with respect to their capacity to dissolve biologically active compounds - the nature of the compound and its interaction with the solvent is substantially decisive. It has surprisingly been found that a particular class of solvent is surprisingly effective in dissolving a particular class of biologically active compound.

According to the present invention there is provided a composition comprising a compound of formula I

CH₃CH(OH)C(=O)NR¹R² (I)

where R¹ and R² are each independently hydrogen; or C₁₋₆ alkyl, C₂₋₆ alkenyl or C₃₋₆ cycloalkyl, each of which is optionally substituted by up to three substituents independently selected from phenyl, hydroxy, C₁₋₅ alkoxy, morpholinyl and NR³R⁴ where R³ and R⁴ are each independently C₁₋₃ alkyl; or phenyl optionally substituted by up to three substituents independently selected from C₁₋₃ alkyl; or R¹ and R² together with the nitrogen atom to which they are attached form a morpholinyl, pyrrolidinyl, piperidinyl or azepanyl ring, each of which is optionally substituted by up to three substituents independently selected from C₁₋₃ alkyl;
and at least one biologically active compound, which comprises at least one aromatic five and/or six membered ring wherein the ring contains at least one nitrogen as a ring member,
   with the *provisos*
   (i) that the composition does not contain cyproconazole when the compound of formula 1 is selected from the group consisting of N-butoxypropyl lactamide; 1-(hydroxyethyl) piperidinyl lactamide; N-methyl-N-propyl lactamide; N-(1-ethylpropyl) lactamide; N,N-dimethyl lactamide; N-1,4-dimethylpentyl lactamide; N-(2-hydroxyethyl)-N-benzyl lactamide; N-Morpholinyl lactamide; N-methyl-N-butyl lactamide; N-Isobutyl lactamide; N-Allyl lactamide; N-Ethyl lactamide; N-Ethyl-N-(2-hydroxyethyl) lactamide; and N-isopropyl lactamide; and
   (ii) that the biologically active compound is not nicotinic acid when the compound of formula 1 is diethyl-lactamide.

Alkyl groups and moieties are straight or branched chains. Examples are methyl, ethyl, *iso*-propyl, *n*-propyl, *n*-butyl, *sec*-butyl, *tert*-butyl*, n*-amyl and *iso*-amyl [3-methylbutyl].

Alkenyl groups and moieties may be in the form of straight or branched chains and, where appropriate, may be of either the (E)- or (Z)-configuration. Examples are vinyl and allyl.

Cycloalkyl includes cyclopropyl, cyclopentyl and cyclohexyl.

In one aspect of the composition, in the compound of formula I R¹ and R² are each independently hydrogen; or C₁₋₆ alkyl which is optionally substituted by up to three substituents independently selected from phenyl, hydroxy, C₁₋₅ alkoxy, morpholinyl and NR³R⁴ where R³ and R⁴ are each independently C₁₋₃ alkyl; or R¹ and R² together with the nitrogen atom to which they are attached form a morpholinyl ring which is optionally substituted by up to three substituents independently selected from C₁₋₃ alkyl.

In an even more suitable aspect, R¹ and R² are each independently hydrogen; or C₁₋₆ alkyl; or R¹ and R² together with the nitrogen atom to which they are attached form a morpholinyl ring.

In an even further suitable aspect, R¹ is methyl and R² is methyl, propyl or butyl; or R¹ and R² together with the nitrogen atom to which they are attached form a morpholinyl ring. R³ may be methyl, as may R⁴. For each optional substituent, it is preferred that it is a methyl group. Suitably alkyl groups are branched; most suitably with methyl groups.

The active compound in the composition may be an agrochemical.

In one embodiment of the composition, in the compound of formula 1, R¹ is not hydrogen, methyl, ethyl, propyl, *n*-butyl, *sec*-butyl, *iso*-butyl, *n*-amyl, *iso*-amyl, *iso-*butylenyl, *n*-hexyl, 1-3-dimethylbutyl, allyl, CH₂CH₂OH, 2-hydroxypropyl, 2- hydroxy-isobutyl, 1,3-dihydroxy-2-methyl-2-propyl, tris-hydroxy-methyl-methyl, CH₂CH₂OCH₃, cyclohexyl, phenyl, benzyl, α-methylbenzyl, β-phenylethyl, 3-hydroxypropyl or 1-hydroxy-2-butyl when R² is hydrogen;
R¹ is not methyl, allyl or phenyl when R² is methyl;
R¹ is not ethyl when R² is ethyl;
R¹ is not *n*-butyl when R² is *n*-butyl;
R¹ is not *iso*-butyl when R² is *iso*-butyl;
R¹ is not *n*-amyl when R² is *n*-amyl;
R¹ is not *iso*-amyl when R² is *iso*-amyl;
R¹ is not *n*-hexyl when R² is *n*-hexyl;
R¹ is not allyl when R² is allyl;
R¹ is not butyl or phenyl when R² is phenyl;
R¹ is not benzyl when R² is benzyl;
R¹ is not CH₂CH₂OH or ethyl when R² is CH₂CH₂OH;
R¹ is not 2-hydroxypropyl when R² is 2-hydroxypropyl; and
R¹ and R² together with the nitrogen atom to which they are attached do not form a morpholinyl, pyrrolidinyl or piperidinyl unsubstituted ring.

The composition may further comprise a solvent selected from the group consisting of aliphatic solvents; straight or branched chain paraffins; cyclic hydrocarbons; aromatic solvents; phosphorus containing solvents; sulphur containing solvents; nitrogen containing solvents; aliphatic mono, di or triesters; aromatic mono and di esters; cyclic esters; cyclic, aliphatic and aromatic ketones; alkyl cyclohexanones, dialkyl ketones, acetoacetates, benzyl ketones,; acetophenone; alcohols; cycloalcohols; glycols; glycol ethers and their polymers; propylene glycols; glycol ether acetates; aromatic alcohols; carbonates; ethers and halogenated solvents.

Particularly preferred further solvents are white oil; decalin; mono, di or tri alkylated benzenes; Solvesso 100 or 200ND (t); triethyl phosphate;tributyl phosphate; tri-2-ethylhexylphosphate;methyl oleate;linoleic acid;linolenic acid;oleic acid;dimethyl decanoamide; tetramethyl sulphone; dimethyl sulphoxide;alkyl ureas; alkanolamines; morpholines; amides; alkyl alkanoates, lactates and acetoacetates; fumarates; succinates; adipates; maleates; glycerol and citric acid esters;alkyl benzoates; benzyl alkanoates; alkyl salicylates; phthalates and dibenzoates; gamma butyrolactone; caprolactone; terpene fenchone; cyclohexanone; alkyl cyclohexanones; 2-ethylhexanol and other alkyl alcohols; cyclohexanol; tetrahydrofurfuryl alcohol; ethylene and propylene glycol and their polymers; dipropylene glycol; monomethyl or monobutyl ether; dipropylene glycol diacetate or other glycol ether acetates, or tripropylene glycol monobutyl ether; benzyl alcohol; propylene or butylene carbonate; dimethyl isosorbide; alkoxyalkanols; diphenyl ether; chlorobenzene and the chloroalkanes.

The biologically active compound may comprise a five membered nitrogen containing aromatic ring which may be selected from the group consisting of pyrrole, pyrazole, imidazole, 1,2,3-triazoles and 1,2,4-triazole, and/or a six membered nitrogen containing aromatic ring which may be selected from the group consisting of pyridine, pyridazine, pyrimidine, pyrazine, 1,2,3-triazine, 1,2,4-triazine and 1,3,5 -triazine.

In the case that the compound is an agrochemical it may be selected from the group consisting of insecticides, herbicides, plant growth regulators acaricides, nematocides, miticides, plant activators and fungicides.

The insecticide may be selected from the group consisting of neonicotinoids, bisamides, benzoylureas and carbamates; the herbicide may be selected from the group consisting of triazines and other photosystem 2 inhibitors, 2,6-dinitroanilines, ACCase inhibitors, PPO inhibitors, synthetic auxins, sulphonyl ureas, bipyrillium herbicides, chloroacetanilides, triazolopyrimidines, pyrazoles and herbicidal safeners; the plant growth regulators may be selected from the group consisting of paclobutrazol and maleic hydrazide; and the fungicides may be selected from the group consisting of triazolopyrimidines, pyrimidines, anilinopyrimidines, triazoles and other sterol demethylation inhibitors, MAP kinase inhibitors, strobilurins, adenosine deaminase inhibitors, pyrazoles and carboxamides.

Figure 1 shows the structure of a particularly preferred fungicidal triazolopyrimidine which may be present in the composition of the invention.

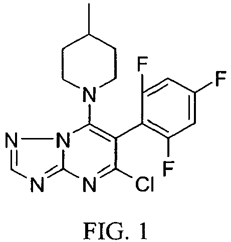

The neonicotinoids may be thiamethoxam and imidiacloprid, the bisamide may be rynaxypyr, the benzoylurea may be chlorfluazuron, the carbamate may be pirimicarb; the triazines are atrazine, simazine and cyanazine, the other photosystem 2 inhibitors may be diuron, prometryn and ametryn, the 2,4-dinitroaniline may be fluazinam, the ACC ase inhibitors may be fluazifop-P-butyl and clodinafop propargyl, the PPO inhibitor may be butafenacil, the synthetic auxins may be fluroxypyr meptyl, the sulfonyl ureas may be nicosulfuron, cinosulfuron, imazosulfuron, primisulfuron methyl, prosulfuron and imazosulfuron, the bipyrillium herbicides may be paraquat and diquat, the chloroacetanilide may be metazachlor, the triazolopyrimidines are cloransulam methyl, florasulam, and penoxsulam, the pyrazole is benzofenap, the herbicidal safener may be cloquintocet, the plant growth regulators may be paclobutrazol and maleic hydrazide; the plant activator is acibenzolar-s-methyl; the pyrimidines may be bupirimate, dimethirimol and ethirimol, the anilinopyrimidines may be cyprodinil and pyrimethanil, the triazoles may be bitertanol, diniconazole, epoxiconazole, fenbuconazole, fluquinconazole, flutriafol, penconazole, tebuconazole, triadimefon, triadimenol, difenoconazole, propiconazole, and hexaconazole, the other sterol demethylation inhibitors are flutriafol, imazalil, and prochloraz, the triazolopyrimidine fungicide may be that shown in Figure 1, the MAP kinase inhibitor may be fludioxonil, the strobilurins may be azoxystrobin and picoxystrobin, the adenosine deaminase inhibitor may be ethirimol, the pyrazole is bixafen and the carboxamides may be boscalid furametpyr, penthiopyrad, thifluzamide, fluopyram and, in particular, the compound 3-difluoromethyl-1-methyl-1H- pyrazole-4-carboxylic acid(9-isopropyl-1,2,3,4-tetrahydro-1,4-methano-naphthalen-5-yl)-amide, shown in Figure 2 below.

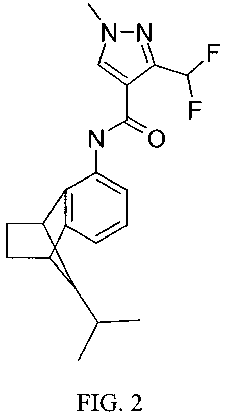

Figure 3 shows the structure of a further preferred fungicide which may be present in the composition of the invention.

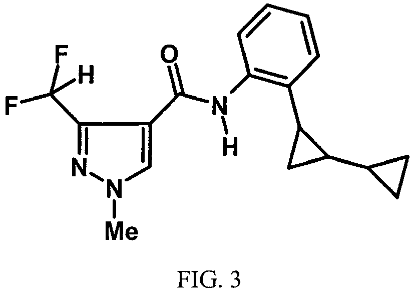

The composition may further comprise at least one compound selected from the group consisting of adjuvants, surfactants, polymers, thickening agents, dyestuffs or pigments, ultraviolet light absorbers, anti bacterial agents, salts, density modifiers, stenching or odour improving agents, taste modifiers, cosolvents, and humectants. The surfactant, may be non-ionic (for example a nonylphenol ethoxylate or an alcohol ethoxylate), anionic (for example an alkyl sulphate, such as sodium lauryl sulphate, or a sulphonate, such as calcium dodecylbenzene sulphonate) or cationic (for example a tertiary amine).

The compound of formula 1 may be present in the composition in an amount of from 0.1 to 99 % by weight of the composition and the biologically active compound, which is preferably an agrochemical, may be present in an amount of 0.1 to 75 %, likewise by weight.

In a preferred embodiment of the composition, the compound of formula 1 may be present in an amount of from 0.1 to 99 % by weight of the composition, the agrochemical may be present in an amount of 0.1 to 75 %, by weight and the solvent may be present in an amount of 0.1 to 90 %, likewise by weight.

The ratio of compound of formula 1 to agrochemical to solvent may be varied according to needs, a ratio of 1:1:1 or near to these limits is likely to be valuable for many of the desired formulations however the limits on each component could be as low as 0.01:1 for the ratio of any two parts of the formulation.

The lactamide component of the present compositions may be prepared by reacting a compound of formula (III) [CH₃CH(OH)C(=O)OR⁵ (III)] where OR⁵ is a leaving group, with a compound of formula (II) [HNR¹R² (II)] where R¹ and R² are as defined above. R⁵ may be C₁₋₄ alkyl. This process produces HOR⁵ as a by-product; a cleaner reaction avoids this by-product: the lactamide component of the composition of the present invention may also be prepared by reacting lactide [3,6-dimethyl-[1,4]-dioxane-2,5-dione] with a compound of formula (II) [HNR¹R² (II)] where R¹ and R² are as defined above. Schematically, such a reaction is shown below:

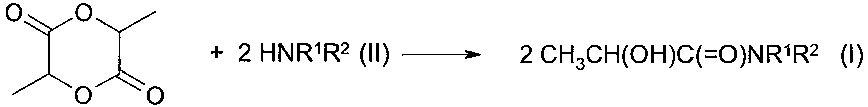

The synthesis is not limited to the above reaction scheme; it illustrates how lactide [3,6-dimethyl-[1,4]-dioxane-2,5-dione] maybe converted to a lactamide by reacting lactide with an amine [suitably a primary or secondary amine] which may be carried out under "solvent-free" conditions as the skilled artisan will appreciate.

In a particularly preferred embodiment of the present inventive composition, the ratio of compound of formula 1 to agrochemical to solvent is 1:1:1 or 2:1:1 or 2:1:2 or 3:1:1 or 3:1:2 or 4.5:1:4.5 or 6:1:3 and in a still more preferred embodiment, the compound of formula 1 is dimethyl lactamide (DML) and the agrochemical is the compound 3-difluoromethyl-1-methyl-1H- pyrazole-4-carboxylic acid(9-isopropyl-1,2,3,4-tetrahydro-1,4-methano-naphthalen-5-yl)-amide shown in Figure 2.

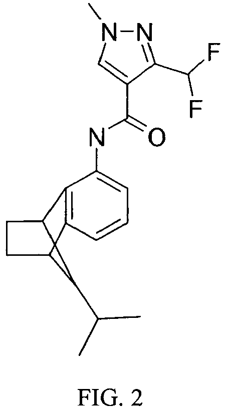

Specific embodiments of the present composition comprise 5 to 95 % DML, 0.5 to 50 % of the Figure 2 compound and 5 to 95 % of a further solvent selected from the group consisting of Solvesso 200ND, dipropylene glycol monobutyl ether, dipropylene glycol diacetate, methyl benzoate, benzyl benzoate, dimethyl decanoamide, dipropylene glycol monomethyl ether and butyl benzoate.

The skilled man will recognise that the present compositions may be formulated as emulsion concentrates, emulsions in water or oil, microencapsulated formulations, aerosol sprays or fogging formulations; and these may be further formulated into granular materials or powders, for example for dry application or as water-dispersible formulations. The solutions so formed may also be used directly on soil or plants or in other, non-agrochemical, applications.

The particularly preferred formulated form of the composition is as an emulsion concentrate (EC).

The low toxicity of the components of the composition, other than the biologically active compound in the case that it is a pesticide, makes the composition particularly suitable for inclusion in, or formulation as, skin creams, lotions, sun creams, personal hygiene products and pharmaceutical formulations, such as tablets, suppositories, inhalers, dermal creams and potions, depending on the nature of the pharmaceutically or cosmetically active ingredient.

The present inventive compositions have a low toxicity and excellent environmental profile meaning that they are particularly useful in applications where the minimisation of pollution is desired. Examples of such applications include paper making, water treatment, forestry applications, public health treatments, use in municipal pools and other water courses, in applications near rivers, lakes, reservoirs or seas and in applications where release to the atmosphere has to be minimised or controlled and where damage to the atmosphere is not desirable. Examples include use of fungicide containing compositions according to the present invention in exterior and interior paints, coatings, varnishes, waxes or other protectant layers or opacifiers, colourants or screens; in dyeing, pigmentation or the use of inks; in cleaning products designed for the home, garden or industrial applications; and in soap or detergent applications for industrial, home or environmental usage. The compositions of the present invention may also be used in shampoos, and in househould detergents and household cleaners (for example surface cleaners), in which the active ingredient may be a fungicide (possibly azoxystrobin) in the case of shampoo or a bacteriocide in the case of the detergents and cleaners.

The present invention also provides a method of making the inventive composition disclosed above by admixing a compound of formula 1 as indicated above with a biologically active compound.

The present invention also provides a non-therapeutic method of controlling an agricultural pest comprising application to the pest or to a surface on which it is capable of being present of an pesticidally effective amount of a composition according to the invention. The pest may be a fungus and the agrochemical may be a fungicide, in particular 3-difluoromethyl-1-methyl-1H- pyrazole-4-carboxylic acid(9-isopropyl-1,2,3,4-tetrahydro-1,4-methano-naphthalen-5-yl)-amide (Figure 2 above) or the fungicide shown in Figure 3.

The invention still further provides the use of the present inventive composition to control a plant pest. In a particularly preferred use, the pest is a phytopathogenic fungus, the compound of formula 1 is dimethyl lactamide, the agrochemical has the structure 3-difluoromethyl-1-methyl-1H- pyrazole-4-carboxylic acid(9-isopropyl-1,2,3,4-tetrahydro-1,4-methano-naphthalen-5-yl)-amide (Figure 2) and the composition comprises a further solvent selected from the group consisting of Solvesso 200ND, dipropylene glycol monobutyl ether or dipropylene glycol diacetate, methyl benzoate, benzyl benzoate, dimethyl decanoamide, dipropylene glycol monomethyl ether and butyl benzoate.

The compositions of the present invention are particularly valuable in formulations where contact with either human or animal skin or eyes is required or may occur by accident. Applications such as the use of shampoo or body cleaning fluids (such as shower gels, hand or body wipes and medical wipes) may benefit from the safe nature of these lactamide solvent present in the composition, which may form part of a cleaning formulation and which may also reduce the irritancy of some of the other ingredients, such as surfactants. In a similar fashion the irritation to skin or eyes caused by the direct application of pharmaceutical or veterinary compositions to them may be reduced relative to the like application of prior art compositions containing the same pharmaceutically active ingredients. The compositions of the present invention may also be used for anti-bacterial purposes. Hand cleansers and fluids used to clean floors, kitchens or vehicles may also benefit from the inherent reduction in risk associated with the safening nature of the lactamide solvent.

The invention is illustrated by the following Examples.

Example 1. The following general method is used to measure the solubility of pesticide samples in solvents. A 2 ml aliquot of solvent is added to a 5 ml volume glass vial. Pesticide is added such that half of the volume of the liquid is filled. The sample is shaken for one minute and left to stand for 24 hours. Samples which have dissolved are refilled with more of the pesticide, shaken and left for a further 24 hours. This process is continued until the samples have equilibrated for three days without the need for further pesticide addition. The samples are then placed in a temperature controlled oven at 25 C for one week prior to analysis by high pressure liquid chromatography. All samples are filtered and centrifuged prior to chromatographic analysis.

Two common solvents used in the pesticide industry are Solvesso 200 and acetophenone. They have been used to manufacture many commercial emulsion concentrate formulations. As a comparison the solubility of fludioxynil, hexaconazole, 3-difluoromethyl-1-methyl-1H- pyrazole-4-carboxylic acid(9-isopropyl-1,2,3,4-tetrahydro-1,4-methano-naphthalen-5-yl)-amide (Figure 2), prometryn, thiamethoxam and cyprodinil, have been compared in these two solvents to dimethyl lactamide. All of these compounds contain either five or six membered aromatic heterocyclic rings. In each case the solubility in dimethyl lactamide is better than in ether Solvesso 200ND or acetophenone.

**Table 1**

| **Solvent** | **Fludioxynil % w/w** | **Diuron % w/w** | **Hexaconazole** | **Compound of Fig. 2** | **Prometryn** | **Epoxiconazole** | **Thiamethoxam** | **Cyprodinil** | **Rynaxypry** | **Ametryn** |
|---|---|---|---|---|---|---|---|---|---|---|
| Dimethyl lactamide | 30.1 | 11.0 | 18 | 32.1 | 43 | 8.0 | 9.0 | 65.0 | 2.8 | 53.0 |
| Acetophenone | 8.5 | 4.8 | 11.7 | 14.1 | 19 | NA | 5.0 | 47.7 | 0.75 | 47.4 |
| Solvesso 200ND | 0.3 | <0.2* | 4.4 | 5.6 | 12 | 2.5 | 0.2 | 36.0 | 0.06 | 29.3 |

| | | | | | | | | | | |
|---|---|---|---|---|---|---|---|---|---|---|
| * Analysis by chromatography was not available for this sample. Diuron was not soluble at 0.2 % w/w. | | | | | | | | | | |

Example 2. The compounds chlorothalonil, tralkoxoydim and napropamide have chemical structures which do not contain aromatic heterocyclic rings. Table 2 displays the solubility of the three solvents dimethyl lactamide, Solvesso 200ND and acetophenone. In each case the solubility of the compounds in dimethyl lactamide is lower than that for the other two solvents.

**Table 2**

| **Solvent** | **Chlorothalonil** | **Tralkoxydim** | **Napropamide** |
|---|---|---|---|
| Dimethyl lactamide | 1.6 | 3.2 | 19.2 |
| Acetophenone | 5.4 | 12.7 | 27.6 |
| Solvesso 200ND | 8.3 | N/A | 20.7 |

## Claims

1. A composition comprising a compound of formula I
CH₃CH(OH)C(=O)NR¹R² (I)
where R¹ and R² are each independently hydrogen; or C₁₋₆ alkyl, C₂₋₆ alkenyl or C₃₋₆ cycloalkyl, each of which is optionally substituted by up to three substituents independently selected from phenyl, hydroxy, C₁₋₅ alkoxy, morpholinyl and NR³R⁴ where R³ and R⁴ are each independently C₁₋₃ alkyl; or phenyl optionally substituted by up to three substituents independently selected from C₁₋₃ alkyl; or R¹ and R² together with the nitrogen atom to which they are attached form a morpholinyl, pyrrolidinyl, piperidinyl or azepanyl ring, each of which is optionally substituted by up to three substituents independently selected from C₁₋₃ alkyl;
and at least one biologically active compound, which comprises at least one aromatic five and/or six membered ring wherein the ring contains at least one nitrogen as a ring member,
with the *provisos*
(i) that the composition does not contain cyproconazole when the compound of formula 1 is selected from the group consisting of N-butoxypropyl lactamide; 1-(hydroxyethyl) piperidinyl lactamide; N-methyl-N-propyl lactamide; N-(1-ethylpropyl) lactamide; N,N-dimethyl lactamide; N-1,4-dimethylpentyl lactamide; N-(2-hydroxyethyl)-N-benzyl lactamide; N-Morpholinyl lactamide; N-methyl-N-butyl lactamide; N-Isobutyl lactamide; N-Allyl lactamide; N-Ethyl lactamide; N-Ethyl-N-(2-hydroxyethyl) lactamide; and N-isopropyl lactamide; and
(ii) that the biologically active compound is not nicotinic acid when the compound of formula 1 is diethyl-lactamide.

2. A composition according to claim 1, wherein the active compound is an agrochemical.

3. A composition according to any preceding claim, wherein in the compound of formula 1 R¹ is not hydrogen, methyl, ethyl, propyl, *n*-butyl, *sec*-butyl, *iso*-butyl, *n*-amyl, *iso*-amyl, *iso*-butylenyl, *n*-hexyl, 1-3-dimethylbutyl, allyl, CH₂CH₂OH, 2-hydroxypropyl, 2- hydroxy-isobutyl, 1,3-dihydroxy-2-methyl-2-propyl, tris-hydroxy-methyl-methyl, CH₂CH₂OCH₃, cyclohexyl, phenyl, benzyl, α-methylbenzyl, β-phenylethyl, 3-hydroxypropyl or 1-hydroxy-2-butyl when R² is hydrogen;
R¹ is not methyl, allyl or phenyl when R² is methyl;
R¹ is not ethyl when R² is ethyl;
R¹ is not *n*-butyl when R² is *n*-butyl;
R¹ is not *iso*-butyl when R² is *iso*-butyl;
R¹ is not *n*-amyl when R² is *n*-amyl;
R¹ is not *iso*-amyl when R² is *iso*-amyl;
R¹ is not *n*-hexyl when R² is *n*-hexyl;
R¹ is not allyl when R² is allyl;
R¹ is not butyl or phenyl when R² is phenyl;
R¹ is not benzyl when R² is benzyl;
R¹ is not CH₂CH₂OH or ethyl when R² is CH₂CH₂OH;
R¹ is not 2-hydroxypropyl when R² is 2-hydroxypropyl; and
R¹ and R² together with the nitrogen atom to which they are attached do not form a morpholinyl, pyrrolidinyl or piperidinyl unsubstituted ring.

4. A composition according to any preceding claim, which further comprises a solvent selected from the group consisting of aliphatic solvents; straight or branched chain paraffins; cyclic hydrocarbons; aromatic solvents; phosphorus containing solvents; sulphur containing solvents; nitrogen containing solvents; aliphatic mono, di or triesters; aromatic mono and di esters; cyclic esters; cyclic, aliphatic and aromatic ketones; alkyl cyclohexanones, dialkyl ketones, acetoacetates, benzyl ketones,; acetophenone; akyl alcohols; cycloalcohols; glycols; glycol ethers and their polymers; propylene glycols; glycol ether acetates; aromatic alcohols; carbonates; ethers and halogenated solvents.

5. A composition according to the preceding claim, wherein the solvent is selected from the group consisting of white oil; decalin; mono, di or tri alkylated benzenes; Solvesso 100 or 200ND (t); triethyl phosphate, tributyl phosphate or tris-2-ethylhexylphosphate;methyl oleate;linoleic acid;linolenic acid;oleic acid;dimethyl decanoamide; tetramethyl sulphone; dimethyl sulphoxide;alkyl ureas; alkanolamines; morpholines; amides; alkyl alkanoates, lactates and acetoacetates; fumarates; succinates; adipates; maleates; glycerol and citric acid esters;alkyl benzoates; benzyl alkanoates; alkyl salicylates; phthalates and dibenzoates; gamma butyrolactone; caprolactone; terpene fenchone; cyclohexanone; alkyl cyclohexanones; 2-ethylhexanol; cyclohexanol; tetrahydrofurfuryl alcohol; ethylene and propylene glycol and their polymers; dipropylene glycol; monomethyl or monobutyl ether; dipropylene glycol diacetate, or tripropylene glycol monobutyl ether; benzyl alcohol; propylene or butylene carbonate; dimethyl isosorbide; alkoxyalkanols; diphenyl ether; chlorobenzene and chloroalkanes.

6. A composition according to any preceding claim, wherein the five membered nitrogen containing aromatic ring is selected from the group consisting of pyrrole, pyrazole, imidazole, 1,2,3-triazoles and 1,2,4-triazole.

7. A composition according to any preceding claim, wherein the six membered nitrogen containing aromatic ring is selected from the group consisting of pyridine, pyridazine, pyrimidine, pyrazine, 1,2,3-triazine, 1,2,4-triazine and 1,3,5 -triazine.

8. A composition according to any preceding claim, wherein the agrochemical is selected from the group consisting of insecticides, herbicides, plant growth regulators, plant activators, acaricides, nematocides, miticides and fungicides.

9. A composition according to the preceding claim, wherein the insecticide is selected from the group consisting of neonicotinoids, bisamides, benzoylureas and carbamates; the herbicide is selected from the group consisting of triazines and other photosystem 2 inhibitors, 2,6-dinitroanilines, ACCase inhibitors, PPO inhibitors, synthetic auxins, sulphonyl ureas, bipyrillium herbicides, chloroacetanilides, triazolopyrimidines, pyrazoles and herbicidal safeners; the plant growth regulators are selected from the group consisting of paclobutrazol and maleic hydrazide; and the fungicides are selected from the group consisting of pyrimidines, anilinopyrimidines, triazoles and other sterol demethylation inhibitors, triazolopyrimidines MAP kinase inhibitors, strobilurins, adenosine deaminase inhibitors, pyrazoles and carboxamides.

10. A composition according to the preceding claim, wherein neonicotinoids are thiamethoxam and imidiacloprid, the bisamide is rynaxypyr, the benzoylurea is chlorfluazuron, the carbamate is pirimicarb; the triazines are atrazine, simazine and cyanazine, the other photosystem 2 inhibitors are diuron, prometryn and ametryn, the 2,4-dinitroaniline is fluazinam, the ACC ase inhibitors are fluazifop-P-butyl and clodinafop propargyl, the PPO inhibitor is butafenacil, the synthetic auxins are fluroxypyr meptyl, the sulfonyl ureas are nicosulfuron, cinosulfuron, imazosulfuron, primisulfuron methyl, prosulfuron and imazosulfuron, the bipyrillium herbicides are paraquat and diquat, the chloroacetanilide is metazachlor, the triazolopyrimidines are cloransulam methyl, florasulam, and penoxsulam, the pyrazole is benzofenap, the herbicidal safener is cloquintocet, the plant growth regulators are paclobutrazol and maleic hydrazide; the plant activator is acibenzolar-s-methyl the pyrimidines are bupirimate, dimethirimol and ethirimol, the anilinopyrimidines are cyprodinil and pyrimethanil, the triazolopyrimidine fungicide has the structure shown in Figure 1, the triazoles are bitertanol, diniconazole, epoxiconazole, fenbuconazole, fluquinconazole, flutriafol, penconazole, tebuconazole, triadimefon, triadimenol, difenoconazole, propiconazole, and hexaconazole, the other sterol demethylation inhibitors are flutriafol, imazalil, and prochloraz, the MAP kinase inhibitor is fludioxonil, the strobilurins are azoxystrobin and picoxystrobin, the adenosine deaminase inhibitor is ethirimol, the pyrazole is bixafen and the carboxamides are boscalid furametpyr, penthiopyrad, thifluzamide, fluopyram and the compound 3-difluoromethyl-1-methyl-1H- pyrazole-4-carboxylic acid(9-isopropyl-1,2,3,4-tetrahydro-1,4-methano-naphthalen-5-yl)-amide, as shown in Figure 2.

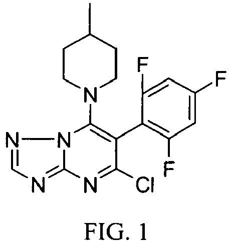

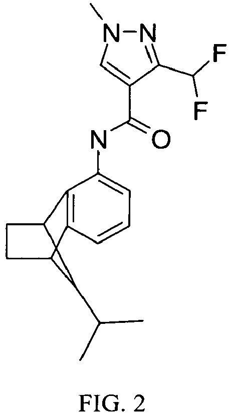

11. A composition according to any preceding claim, which further comprises at least one compound selected from the group consisting of adjuvants, surfactants, polymers, thickening agents, dyestuffs or pigments, ultraviolet light absorbers, anti bacterial agents, salts, density modifiers, stenching or odour improving agents, taste modifiers, cosolvents, and humectants.

12. A composition according to any preceding claim, wherein the compound of formula 1 is present in an amount of from 0.1 to 99 % by weight of the composition and the agrochemical is present in an amount of 0.1 to 75 %, likewise by weight.

13. A composition according to any one of claims 2 to 12, wherein the compound of formula 1 is present in an amount of from 0.1 to 99 % by weight of the composition, the agrochemical is present in an amount of 0.1 to 75 %, by weight and the solvent is present in an amount of 0.1 to 90 %, likewise by weight.

14. A composition according to the preceding claim, wherein the ratio of compound of formula 1 to agrochemical to solvent is defined within the limits 0.01 to 1 : 0.01 to 1 : 0.01 to 1.

15. A composition according to the preceding claim wherein the ratio of compound of formula 1 to agrochemical to solvent is 1:1:1 or 2:1:1 or 2:1:2 or 3:1:1 or 3:1:2 or 4.5:1:4.5 or 6:1:3.

16. A composition according to any preceding claim, wherein the compound of formula 1 is dimethyl lactamide and the agrochemical is 3-difluoromethyl-1-methyl-1H- pyrazole-4-carboxylic acid(9-isopropyl-1,2,3,4-tetrahydro-1,4-methano-naphthalen-5-yl)-amide (shown in Figure 2).

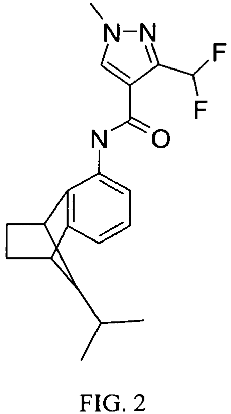

17. A composition according to the preceding claim, comprising 5 to 95 % DML, 0.5 to 50 % 3-difluoromethyl-1-methyl-1H- pyrazole-4-carboxylic acid(9-isopropyl-1,2,3,4-tetrahydro-1,4-methano-naphthalen-5-yl)-amide (Figure 2) and 5 to 95 % solvent selected from the group consisting of the solvents of claim 4.

18. A composition according to claim 17, wherein the solvent is selected from the group consisting of Solvesso 200ND, dipropylene glycol monobutyl ether, dipropylene glycol diacetate, methyl benzoate, benzyl benzoate, dimethyl decanoamide, dipropylene glycol monomethyl ether and butyl benzoate.

19. A composition according to any preceding claim, when formulated as an emulsion concentrate (EC).

20. A method of making a composition according to any preceding claim, comprising admixing a compound of formula 1 according to claim 1 with an biologically active agent according to claim 1.

21. A method, excluding therapeutic methods, of controlling an agricultural pest comprising application to the pest or to a surface on which it is capable of being present of an pesticidally effective amount of a composition according to any one of claims 1 to 19.

22. A method according to the preceding claim, wherein the pest is a fungus and the agrochemical is a fungicide.

23. A method according to the preceding claim, wherein the fungicide has the structure shown in Figure 2 (3-difluoromethyl-1-methyl-1H- pyrazole-4-carboxylic acid(9-isopropyl-1,2,3,4-tetrahydro-1,4-methano-naphthalen-5-yl)-amide)

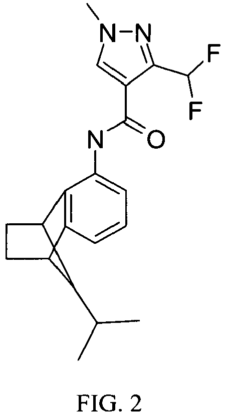

24. Use of a composition according of any one of claims 1 to 19 to control a plant pest.

25. Use according to the preceding claim, wherein the pest is a phytopathogenic fungus, the compound of formula 1 is dimethyl lactamide, the agrochemical has the structure of Figure 2 and the composition comprises a solvent selected from the group consisting of Solvesso 200ND, dipropylene glycol monobutyl ether or dipropylene glycol diacetate, methyl benzoate, benzyl benzoate, dimethyl decanoamide, dipropylene glycol monomethyl ether and butyl benzoate.

## Patentansprüche

1. Zusammensetzung, umfassend eine Verbindung der Formel I
CH₃CH(OH)C(=O)NR¹R² (I),
wobei R¹ und R² jeweils unabhängig voneinander für Wasserstoff oder C₁₋₆-Alkyl, C₂₋₆-Alkenyl oder C₃₋₆-Cycloalkyl, jeweils gegebenenfalls substituiert durch bis zu drei Substituenten unabhängig voneinander ausgewählt aus Phenyl, Hydroxy, C₁₋₅-Alkoxy, Morpholinyl und NR³R⁴, wobei R³ und R⁴ jeweils unabhängig voneinander für C₁₋₃-Alkyl stehen, oder Phenyl, gegebenenfalls substituiert durch bis zu drei Substituenten unabhängig voneinander ausgewählt aus C₁₋₃-Alkyl, stehen oder R¹ und R² zusammen mit dem Stickstoffatom, an das sie gebunden sind, einen Morpholinyl-, Pyrrolidinyl-, Piperidinyl- oder Azepanylring, jeweils gegebenenfalls substituiert durch bis zu drei Substituenten unabhängig voneinander ausgewählt aus C₁₋₃-Alkyl, bilden,
und mindestens einen biologischen Wirkstoff, welcher mindestens einen aromatischen fünf- und/oder sechsgliedrigen Ring umfasst, wobei der Ring mindestens einen Stickstoff als Ringglied enthält,
mit den *Maßgaben,*
(i) dass die Zusammensetzung nicht Cyproconazol enthält, wenn die Verbindung der Formel 1 aus der aus N-Butoxypropyllactamid, 1-(Hydroxyethyl)piperidinyllactamid, N-Methyl-N-propyllactamid, N-(1-Ethylpropyl)lactamid, N,N-Dimethyllactamid, N-1,4-Dimethylpentyllactamid, N-(2-Hydroxyethyl)-N-Benzyllactamid, N-Morpholinyllactamid, N-Methyl-N-butyllactamid, N-Isobutyllactamid, N-Allyllactamid, N-Ethyllactamid, N-Ethyl-N-(2-hydroxyethyl)lactamid und N-Isopropyllactamid bestehenden Gruppe ausgewählt ist, und
(ii) dass es sich bei dem biologischen Wirkstoff nicht um Nicotinsäure handelt, wenn es sich bei der Verbindung der Formel 1 um Diethyllactamid handelt.

2. Zusammensetzung nach Anspruch 1, wobei es sich bei dem Wirkstoff um eine agrochemische Substanz handelt.

3. Zusammensetzung nach einem der vorhergehenden Ansprüche, wobei in der Verbindung der Formel 1 R¹ nicht für Wasserstoff, Methyl, Ethyl, Propyl, n-Butyl, sek.-Butyl, Isobutyl, n-Amyl, Isoamyl, Isobutylenyl, n-Hexyl, 1,3-Dimethylbutyl, Allyl, CH₂CH₂OH, 2-Hydroxypropyl, 2-Hydroxyisobutyl, 1,3-Dihydroxy-2-methyl-2-propyl, Trishydroxymethylmethyl, CH₂CH₂OCH₃, Cyclohexyl, Phenyl, Benzyl, α-Methylbenzyl, β-Phenylethyl, 3-Hydroxypropyl oder 1-Hydroxy-2-butyl steht, wenn R² für Wasserstoff steht,
R¹ nicht für Methyl, Allyl oder Phenyl steht, wenn R² für Methyl steht,
R¹ nicht für Ethyl steht, wenn R² für Ethyl steht, R¹ nicht für n-Butyl steht, wenn R² für n-Butyl steht,
R¹ nicht für Isobutyl steht, wenn R² für Isobutyl steht,
R¹ nicht für n-Amyl steht, wenn R² für n-Amyl steht,
R¹ nicht für Isoamyl steht, wenn R² für Isoamyl steht,
R¹ nicht für n-Hexyl steht, wenn R² für n-Hexyl steht,
R¹ nicht für Allyl steht, wenn R² für Allyl steht, R¹ nicht für Butyl oder Phenyl steht, wenn R² für Phenyl steht,
R¹ nicht für Benzyl steht, wenn R² für Benzyl steht,
R¹ nicht für CH₂CH₂OH oder Ethyl steht, wenn R² für CH₂CH₂OH steht,
R¹ nicht für 2-Hydroxypropyl steht, wenn R² für 2-Hydroxypropyl steht, und
R¹ und R² zusammen mit dem Stickstoffatom, an das sie gebunden sind, keinen unsubstituierten Morpholinyl-, Pyrrolidinyl- oder Piperidinylring bilden.

4. Zusammensetzung nach einem der vorhergehenden Ansprüche, welche weiterhin ein Lösungsmittel ausgewählt aus der Gruppe bestehend aus aliphatischen Lösungsmitteln, geradkettigen oder verzweigten Paraffinen, cyclischen Kohlenwasserstoffen, aromatischen Lösungsmitteln, phosphorhaltigen Lösungsmitteln, schwefelhaltigen Lösungsmitteln, stickstoffhaltigen Lösungsmitteln, aliphatischen Mono-, Di- oder Triestern, aromatischen Mono- und Diestern, cyclischen Estern, cyclischen, aliphatischen und aromatischen Ketonen, Alkylcyclohexanonen, Dialkylketonen, Acetoessigsäureestern, Benzylketonen, Acetophenon, Alkylalkoholen, Cycloalkoholen, Glykolen, Glykolethern und deren Polymeren, Propylenglykolen, Glykoletheracetaten, aromatischen Alkoholen, Kohlensäureestern, Ethern und halogenierten Lösungsmitteln umfasst.

5. Zusammensetzung nach dem vorhergehenden Anspruch, wobei das Lösungsmittel aus der aus Weißöl, Decalin, mono-, di- oder trialkylierten Benzolen, Solvesso 100 oder 200ND (t), Phosphorsäuretriethylester, Phosphorsäuretributylester oder Phosphorsäuretris-2-ethylhexylester, Ölsäuremethylester, Linolsäure, Linolensäure, Ölsäure, Dimethyldecanoamid, Tetramethylsulfon, Dimethylsulfoxid, Alkylharnstoffen, Alkanolaminen, Morpholinen, Amiden, Alkansäurealkylestern, Milchsäurealkylestern und Acetoessigsäurealkylestern, Fumarsäureestern, Bernsteinsäureestern, Adipinsäureestern, Maleinsäureestern, Glycerin- und Zitronensäureestern, Benzoesäurealkylestern, Alkansäurebenzylestern, Salicylsäurealkylestern, Phthalsäureestern und Dibenzoesäureestern, gamma-Butyrolacton, Caprolacton, Terpenfenchon, Cyclohexanon, Alkylcyclohexanonen, 2-Ethylhexanol, Cyclohexanol, Tetrahydrofurfurylalkohol, Ethylen- und Propylenglykol und deren Polymeren, Dipropylenglykol, Monomethyl- oder Monobutylether, Dipropylenglykoldiacetat, oder Tripropylenglykolmonobutylether, Benzylalkohol, Propylen- oder Butylencarbonat, Dimethylisosorbid, Alkoxyalkanolen, Diphenylether, Chlorbenzol und Chloralkanen bestehenden Gruppe ausgewählt ist.

6. Zusammensetzung nach einem der vorhergehenden Ansprüche, wobei der fünfgliedrige stickstoffhaltige aromatische Ring aus der aus Pyrrol, Pyrazol, Imidazol, 1,2,3-Tirazolen und 1,2,4-Triazol bestehenden Gruppe ausgewählt ist.

7. Zusammensetzung nach einem der vorhergehenden Ansprüche, wobei der sechsgliedrige stickstoffhaltige aromatische Ring aus der aus Pyridin, Pyridazin, Pyrimidin, Pyrazin, 1,2,3-Triazin, 1,2,4-Triazin und 1,3,5-Triazin bestehenden Gruppe ausgewählt ist.

8. Zusammensetzung nach einem der vorhergehenden Ansprüche, wobei die agrochemische Substanz aus der aus Insektiziden, Herbiziden, Pflanzenwachstumsregulatoren, Pflanzenaktivatoren, Akariziden, Nematoziden, Mitiziden und Fungiziden bestehenden Gruppe ausgewählt ist.

9. Zusammensetzung nach einem der vorhergehenden Ansprüche, wobei das Insektizid aus der aus Neonicotinoiden, Bisamiden, Benzoylharnstoffen und Carbamaten bestehenden Gruppe ausgewählt ist, das Herbizid aus der aus Triazinen und anderen Photosystem-2-Inhibitoren, 2,6-Dinitroanilinen, ACCase-Inhibitoren, PPO-Inhibitoren, synthetischen Auxinen, Sulfonylharnstoffen, Bipyrilliumherbiziden, Chloracetaniliden, Triazolopyrimidinen, Pyrazolen und herbiziden Safenern bestehenden Gruppe ausgewählt ist, die Pflanzenwachstumsregulatoren aus der aus Paclobutrazol und Maleinsäurehydrazid bestehenden Gruppe ausgewählt sind und die Fungizide aus der aus Pyrimidinen, Anilinopyrimidinen, Triazolen und anderen Steroldemethylierungsinhibitoren, Triazolopyrimidinen, MAP-Kinase-Inhibitoren, Strobilurinen, Adenosindeaminaseinhibitoren, Pyrazolen und Carbonsäureamiden bestehenden Gruppe ausgewählt sind.

10. Zusammensetzung nach dem vorhergehenden Anspruch, wobei es sich bei den Neonicotinoiden um Thiamethoxam und Imidacloprid handelt, es sich bei dem Bisamid um Rynaxypyr handelt, es sich bei dem Benzoylharnstoff um Chlorfluazuron handelt, es sich bei dem Carbamat um Pirimicarb handelt, es sich bei den Triazinen um Atrazin, Simazin und Cyanazin handelt, es sich bei den anderen Photosystem-2-Inhibitoren um Diuron, Prometryn und Ametryn handelt, es sich bei dem 2,4-Dinitroanilin um Fluazinam handelt, es sich bei den ACCase-Inhibitoren um Fluazifop-P-butyl und Clodinafoppropargyl handelt, es sich bei dem PPO-Inhibitor um Butafenacil handelt, es sich bei dem synthetischen Auxin um Fluroxypyr-meptyl handelt, es sich bei den Sulfonylharnstoffen um Nicosulfuron, Cinosulfuron, Imazosulfuron, Primisulfuron-methyl, Prosulfuron und Imazosulfuron handelt, es sich bei den Bipyrilliumherbiziden um Paraquat und Diquat handelt, es sich bei dem Chloracetanilid um Metazachlor handelt, es sich bei den Triazolopyrimidinen um Cloransulam-methyl, Florasulam und Penoxsulam handelt, es sich bei dem Pyrazol um Benzofenap handelt, es sich bei dem herbiziden Safener um Cloquintocet handelt, es sich bei den Pflanzenwachstumsregulatoren um Paclobutrazol und Maleinsäurehydrazid handelt, es sich bei dem Pflanzenaktivator um Acibenzolar-S-methyl handelt, es sich bei den Pyrimidinen um Bupirimiat, Dimethirimol und Ethirimol handelt, es sich bei den Anilinopyrimidinen um Cyprodinil und Pyrimethanil handelt, das Triazolopyrimidinfungizid die in Figur 1 gezeigte Struktur aufweist, es sich bei den Triazolen um Bitertanol, Diniconazol, Epoxiconazol, Fenbuconazol, Fluquinconazol, Flutriafol, Penconazol, Tebuconazol, Triadimefon, Triadimenol, Difenoconazol, Propiconazol und Hexaconazol handelt, es sich bei den anderen Steroldemethylierungsinhibitoren um Flutriafol, Imazalil und Prochloraz handelt, es sich bei dem MAP-Kinase-Inhibitor um Fludioxonil handelt, es sich bei den Strobilurinen um Azoxystrobin und Picoxystrobin handelt, es sich bei dem Adenosindeaminaseinhibitor um Ethirimol handelt, es sich bei dem Pyrazol um Bixafen handelt und es sich bei den Carbonsäureamiden um Boscalid, Furametpyr, Penthiopyrad, Thifluzamid, Fluopyram und die Verbindung 3-Difluormethyl-1-methyl-1H-pyrazol-4-carbonsäure-(9-isopropyl-1,2,3,4-tetrahydro-1,4-methanonaphthalin-5-yl)amid, wie in Figur 2 gezeigt, handelt.

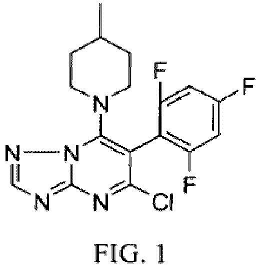

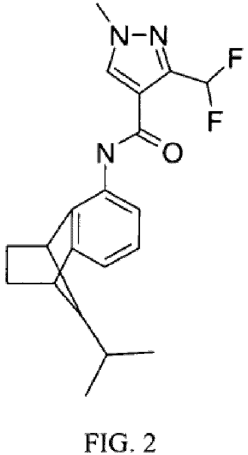

11. Zusammensetzung nach einem der vorhergehenden Ansprüche, welche weiterhin mindestens eine aus der aus Adjuvanzien, Tensiden, Polymeren, Verdickungsmitteln, Farbstoffen oder Pigmenten, UV-absorbierenden Substanzen, antibakteriellen Mitteln, Salzen, dichtemodifizierenden Substanzen, stinkenden oder geruchsverbessernden Mitteln, geschmacksmodifizierenden Mitteln, Kosolvenzien und Feuchthaltemitteln bestehenden Gruppe ausgewählte Verbindung umfasst.

12. Zusammensetzung nach einem der vorhergehenden Ansprüche, wobei die Verbindung der Formel 1 in einer Menge von 0,1 bis 99 Gew.-% der Zusammensetzung vorliegt und die agrochemische Substanz in einer Menge von 0,1 bis 75 Gew.-% vorliegt.

13. Zusammensetzung nach einem der Ansprüche 2 bis 12, wobei die Verbindung der Formel 1 in einer Menge von 0,1 bis 99 Gew.-% der Zusammensetzung vorliegt, die agrochemische Substanz in einer Menge von 0,1 bis 75 Gew.-% vorliegt und das Lösungsmittel in einer Menge von 0,1 bis 90 Gew.-% vorliegt.

14. Zusammensetzung nach dem vorhergehenden Anspruch, wobei das Verhältnis von Verbindung der Formel 1 zu agrochemischer Substanz zu Lösungsmittel innerhalb der Grenzen von 0,01 bis 1:0,01 bis 1:0,01 bis 1 definiert ist.

15. Zusammensetzung nach dem vorhergehenden Anspruch, wobei das Verhältnis von Verbindung der Formel 1 zu agrochemischer Substanz zu Lösungsmittel 1:1:1 oder 2:1:1 oder 2:1:2 oder 3:1:1 oder 3:1:2 oder 4,5:1:4,5 oder 6:1:3 beträgt.

16. Zusammensetzung nach einem der vorhergehenden Ansprüche, wobei es sich bei der Verbindung der Formel 1 um Dimethyllactamid handelt und es sich bei der agrochemischen Substanz um 3-Difluormethyl-1-methyl-1H-pyrazol-4-carbonsäure-(9-isopropyl-1,2,3,4-tetrahydro-1,4-methano-naphthalin-5-yl)amid (in Figur 2 gezeigt) handelt.

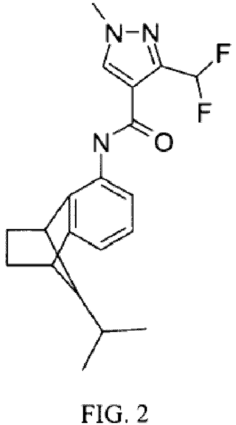

17. Zusammensetzung nach einem der vorhergehenden Ansprüche, welche 5 bis 95% DML, 0,5 bis 50% 3-Difluormethyl-1-methyl-1H-pyrazol-4-carbonsäure-(9-isopropyl-1,2,3,4-tetrahydro-1,4-methano-naphthalin-5-yl)amid (Figur 2) und 5 bis 95% eines Lösungsmittels ausgewählt aus der aus den Lösungsmitteln nach Anspruch 4 bestehenden Gruppe umfasst.

18. Zusammensetzung nach Anspruch 17, wobei das Lösungsmittel aus der aus Solvesso 200ND, Dipropylenglykolmonobutylether, Dipropylenglykoldiacetat, Benzoesäuremethylester, Benzoesäurebenzylester, Dimethyldecanoamid, Dipropylenglykolmonomethylether und Benzoesäurebutylester bestehenden Gruppe ausgewählt ist.

19. Zusammensetzung nach einem der vorhergehenden Ansprüche, als Emulsionskonzentrat (EC) formuliert.

20. Verfahren zur Herstellung einer Zusammensetzung nach einem der vorhergehenden Ansprüche, bei dem man eine Verbindung der Formel 1 nach Anspruch 1 mit einem biologischen Wirkstoff nach Anspruch 1 mischt.

21. Verfahren, ausschließlich therapeutische Verfahren, zur Bekämpfung eines landwirtschaftlichen Schädlings, welches das Aufbringen einer pestizidwirksamen Menge einer Zusammensetzung nach einem der Ansprüche 1 bis 19 auf den Schädling oder auf eine Oberfläche, auf welcher er vorhanden sein könnte, umfasst.

22. Verfahren nach dem vorhergehenden Anspruch, wobei es sich bei dem Schädling um einen Pilz handelt und es sich bei der agrochemischen Substanz um ein Fungizid handelt.

23. Verfahren nach dem vorhergehenden Anspruch, wobei das Fungizid die in Figur 2 gezeigte Struktur aufweist (3-Difluormethyl-1-methyl-1H-pyrazol-4-carbonsäure-(9-isopropyl-1,2,3,4-tetrahydro-1,4-methanonaphthalin-5-yl) amid).

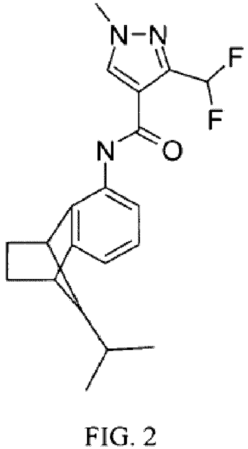

24. Verwendung einer Zusammensetzung nach einem der Ansprüche 1 bis 19 zur Bekämpfung eines Pflanzenschädlings.

25. Verwendung nach dem vorhergehenden Anspruch, wobei es sich bei dem Schädling um einen phytopathogenen Pilz handelt, es sich bei der Verbindung der Formel 1 um Dimethyllactamid handelt, die agrochemische Substanz die Struktur der Figur 2 aufweist und die Zusammensetzung ein aus der aus Solvesso 200ND, Dipropylenglykolmonobutylether oder Dipropylenglykoldiacetat, Benzoesäuremethylester, Benzoesäurebenzylester, Dimethyldecanoamid, Dipropylenglykolmonomethylether und Benzoesäurebutylether bestehenden Gruppe ausgewähltes Lösungsmittel umfasst.

## Revendications

1. Composition comprenant un composé de formule I
CH₃CH(OH)C(=O)NR¹R² (I)
où R¹ et R² sont chacun indépendamment hydrogène ; ou alkyle en C₁₋₆, alcényle en C₂₋₆ ou cycloalkyle en C₃₋₆, dont chacun est facultativement substitué par jusqu'à trois substituants indépendamment choisis parmi phényle, hydroxy, alcoxy en C₁₋₅, morpholinyle et NR³R⁴ où R³ et R⁴ sont chacun indépendamment alkyle en C₁₋₃ ; ou phényle facultativement substitué par jusqu'à trois substituants indépendamment choisis parmi alkyle en C₁₋₃ ; ou R¹ et R² conjointement avec l'atome d'azote auquel ils sont liés forment un cycle morpholinyle, pyrrolidinyle, pipéridinyle ou azépanyle, dont chacun est facultativement substitué par jusqu'à trois substituants indépendamment choisis parmi alkyle en C₁₋₃ ;
et au moins un composé biologiquement actif, qui comprend au moins un cycle aromatique et/ou un cycle à six chaînons, le cycle contenant au moins un azote en tant que chaînon de cycle,
à condition que
(i) la composition ne contienne pas de cyproconazole lorsque le composé de formule 1 est choisi dans le groupe constitué des N-butoxypropyl-lactamide ; 1-(hydroxyéthyl)pipéridinyl-lactamide ; N-méthyl-N-propyl-lactamide ; N-(1-éthylpropyl)lactamide ; N,N-diméthyl-lactamide ; N-1,4-diméthylpentyl-lactamide ; N-(2-hydroxyéthyl)-N-benzyl-lactamide ; N-morpholinyl-lactamide ; N-méthyl-N-butyl-lactamide ; N-isobutyl-lactamide ; N-allyl-lactamide ; N-éthyl-lactamide ; N-éthyl-N-(2-hydroxyéthyl)lactamide ; et N-isopropyl-lactamide ; et
(ii) le composé biologiquement actif ne soit pas l'acide nicotinique lorsque le composé de formule 1 est le diéthyl-lactamide.

2. Composition selon la revendication 1, dans laquelle le composé actif est une substance agrochimique.

3. Composition selon l'une quelconque des revendications précédentes, dans laquelle, dans le composé de formule 1, R¹ n'est pas hydrogène, méthyle, éthyle, propyle, n-butyle, sec-butyle, *iso*-butyle, n-amyle, *iso*-amyle, *iso*-butylényle, *n*-hexyle, 1-3-diméthylbutyle, allyle, CH₂CH₂OH, 2-hydroxypropyle, 2-hydroxy-isobutyle, 1,3-dihydroxy-2-méthyl-2-propyle, tris- hydroxy-méthyl-méthyle, CH₂CH₂OCH₃, cyclohexyle, phényle, benzyle, α-méthylbenzyle, β-phényléthyle, 3-hydroxypropyle ou 1-hydroxy-2-butyle lorsque R² est hydrogène ;
R¹ n'est pas méthyle, allyle ou phényle lorsque R² est méthyle ;
R¹ n'est pas éthyle lorsque R² est éthyle ;
R¹ n'est pas n-butyle lorsque R² est *n*-butyle ;
R¹ n'est pas *iso*-butyle lorsque R² est *iso*-butyle ;
R¹ n'est pas n-amyle lorsque R est n-amyle ;
R¹ n'est pas *iso*-amyle lorsque R² est *iso*-amyle ;
R¹ n'est pas n-hexyle lorsque R est n-hexyle ;
R¹ n'est pas allyle lorsque R² est allyle ;
R¹ n'est pas butyle ou phényle lorsque R² est phényle ; R¹ n'est pas benzyle lorsque R² est benzyle ;
R¹ n'est pas CH₂CH₂OH ou éthyle lorsque R² est CH₂CH₂OH ; R¹ n'est pas 2-hydroxypropyle lorsque R² est 2-hydroxypropyle ; et
R¹ et R² conjointement avec l'atome d'azote auquel ils sont liés ne forment pas un cycle morpholinyle, pyrrolidinyle ou pipéridinyle non substitué.

4. Composition selon l'une quelconque des revendications précédentes, qui comprend en outre un solvant choisi dans le groupe constitué de solvants aliphatiques ; paraffines à chaîne linéaire ou ramifiée ; hydrocarbures cycliques ; solvants aromatiques ; solvants contenant du phosphore ; solvants contenant du soufre ; solvants contenant de l'azote ; mono, di ou triesters aliphatiques ; mono et diesters aromatiques ; esters cycliques ; cétones cycliques, aliphatiques et aromatiques ; alkyl-cyclohexanones, dialkyl-cétones, acétoacétates, benzyl-cétones, ; acétophénone ; alcools alkyliques ; cycloalcools ; glycols ; éthers de glycol et leurs polymères ; propylène glycols ; acétates d'éther de glycol ; alcools aromatiques ; carbonates ; éthers et solvants halogénés.

5. Composition selon la revendication précédente, dans laquelle le solvant est choisi dans le groupe constitué de l'huile blanche ; la décaline ; des benzènes mono-, di- ou tri-alkylés ; Solvesso 100 ou 200ND (t) ; le phosphate de triéthyle, le phosphate de tributyle ou le phosphate de tris-2-éthylhexyle ; l'oléate de méthyle ; l'acide linoléique ; l'acide linolénique ; l'acide oléique ; le diméthyldécanoamide ; la tétraméthylsulfone ; le diméthylsulfoxyde ; des alkylurées ; des alcanolamines ; des morpholines ; des amides ; des alcanoates, lactates et acétoacétates d'alkyle ; des fumarates ; des succinates ; des adipates ; des maléates ; des esters de glycérol et d'acide citrique ; des benzoates d'alkyle ; des alcanoates de benzyle ; des salicylates d'alkyle ; des phtalates et des dibenzoates ; la gamma-butyrolactone ; la caprolactone ; la terpène-fenchone ; la cyclohexanone ; des alkyl-cyclohexanones ; le 2-éthylhexanol ; le cyclohexanol ; l'alcool tétrahydrofurfurylique ; les éthylène et propylène glycols et leurs polymères ; le dipropylène glycol ; l'éther monométhylique ou monobutylique ; le diacétate de dipropylène glycol, ou l'éther monobutylique de tripropylène glycol ; l'alcool benzylique ; le carbonate de propylène ou butylène ; le diméthylisosorbide ; des alcoxyalcanols ; l'éther diphénylique ; le chlorobenzène et des chloroalcanes.

6. Composition selon l'une quelconque des revendications précédentes, dans laquelle le cycle aromatique contenant de l'azote à cinq chaînons est choisi dans le groupe constitué de pyrrole, pyrazole, imidazole, 1,2,3-triazoles et 1,2,4-triazole.

7. Composition selon l'une quelconque des revendications précédentes, dans laquelle le cycle aromatique contenant de l'azote à six chaînons est choisi dans le groupe constitué des pyridine, pyridazine, pyrimidine, pyrazine, 1,2,3-triazine, 1,2,4-triazine et 1,3,5-triazine.

8. Composition selon l'une quelconque des revendications précédentes, dans laquelle la substance agrochimique est choisie dans le groupe constitué des insecticides, herbicides, régulateurs de croissance de plante, activateurs de plante, acaricides, nématicides, miticides et fongicides.

9. Composition selon la revendication précédente, dans laquelle l'insecticide est choisi dans le groupe constitué des néonicotinoïdes, bisamides, benzoylurées et carbamates ; l'herbicide est choisi dans le groupe constitué des triazines et autres inhibiteurs du photosystème 2, 2,6-dinitroanilines, inhibiteurs d'ACCase, inhibiteurs de PPO, auxines synthétiques, sulfonylurées, herbicides de bipyrillium, chloroacétanilides, triazolopyrimidines, pyrazoles et phytoprotecteurs herbicides ; les régulateurs de croissance de plante sont choisis dans le groupe constitué du paclobutrazol et de l'hydrazide maléique ; et les fongicides sont choisis dans le groupe constitué des pyrimidines, anilinopyrimidines, triazoles et d'autres inhibiteurs de déméthylation de stérol, inhibiteurs de kinase MAP triazolopyrimidines, strobilurines, inhibiteurs d'adénosine désaminase, pyrazoles et carboxamides.

10. Composition selon la revendication précédente, dans laquelle les néonicotinoïdes sont le thiaméthoxam et l'imidiaclopride, le bisamide est le rynaxypyr, la benzoylurée est le chlorfluazuron, le carbamate est le pirimicarbe ; les triazines sont l'atrazine, la simazine et la cyanazine, les autres inhibiteurs du photosystème 2 sont le diuron, la prométryne et l'amétryne, la 2,4-dinitroaniline est le fluazinam, les inhibiteurs d'ACCase sont le fluazifop-P-butyl et le clodinafop propargyl, l'inhibiteur de PPO est le butafénacil, les auxines synthétiques sont le fluroxypyr meptyl, les sulfonylurées sont le nicosulfuron, le cinosulfuron, l'imazosulfuron, le primisulfuron méthyl, le prosulfuron et l'imazosulfuron, les herbicides de bipyrillium sont le paraquat et le diquat, le chloroacétanilide est le métazachlor, les triazolopyrimidines sont le cloransulam méthyl, le florasulam et le penoxsulam, le pyrazole est le benzofénap, le phytoprotecteur herbicide est le cloquintocet, les régulateurs de croissance de plante sont le paclobutrazol et l'hydrazide maléique ; l'activateur de plante est l'acibenzolar-s-méthyl, les pyrimidines sont le bupirimate, le diméthirimol et l'éthirimol, les anilinopyrimidines sont le cyprodinil et le pyriméthanil, le fongicide triazolopyrimidine a la structure représentée sur la figure 1, les triazoles sont le bitertanol, le diniconazole, l'époxiconazole, le fenbuconazole, le fluquinconazole, le flutriafol, le penconazole, le tébuconazole, le triadiméfon, le triadiménol, le difénoconazole, le propiconazole, et l'hexaconazole, les autres inhibiteurs de déméthylation de stérol sont le flutriafol, l'imazalil, et le prochloraz, l'inhibiteur de kinase MAP est le fludioxonil, les strobilurines sont l'azoxystrobine et la picoxystrobine, l'inhibiteur d'adénosine désaminase est l'éthirimol, le pyrazole est le bixafen et les carboxamides sont le boscalide, le furametpyr, le penthiopyrad, le thifluzamide, le fluopyram et le composé (9-isopropyl-1,2,3,4-tétrahydro-1,4-méthano-naphtalén-5-yl)-amide d'acide 3-difluorométhyl-1-méthyl-1H-pyrazole-4-carboxylique, comme décrit sur la figure 2.

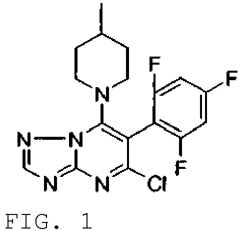

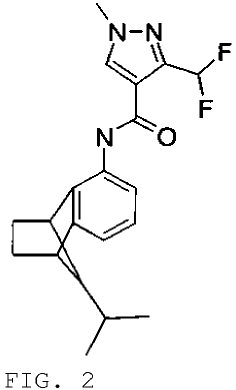

11. Composition selon l'une quelconque des revendications précédentes, qui comprend en outre au moins un composé choisi dans le groupe constitué d'adjuvants, tensioactifs, polymères, agents épaississants, colorants ou pigments, absorbeurs de lumière ultraviolette, agents antibactériens, sels, modificateurs de densité, des agents d'amélioration de mauvaise odeur ou d'odeur, des modificateurs de goût, des co-solvants et des humectants.

12. Composition selon l'une quelconque des revendications précédentes, dans laquelle le composé de formule 1 est présent en une quantité de 0,1 à 99 % en poids de la composition et la substance agrochimique est présente en une quantité de 0,1 à 75 %, également en poids.

13. Composition selon l'une quelconque des revendications 2 à 12, dans laquelle le composé de formule 1 est présent en une quantité de 0,1 à 99 % en poids de la composition, la substance agrochimique est présente en une quantité de 0,1 à 75 %, en poids et le solvant est présent en une quantité de 0,1 à 90 %, de manière similaire en poids.

14. Composition selon la revendication précédente, dans laquelle le rapport du composé de formule 1 à la substance agrochimique et au solvant est défini dans les limites de 0,01 à 1 : 0,01 à 1 : 0,01 à 1.

15. Composition selon la revendication précédente, dans laquelle le rapport du composé de formule 1 à la substance agrochimique et au solvant est 1:1:1 ou 2:1:1 ou 2:1:2 ou 3:1:1 ou 3:1:2 ou 4,5:1:4,5 ou 6:1:3.

16. Composition selon l'une quelconque des revendications précédentes, dans laquelle le composé de formule 1 est le diméthyl-lactamide et la substance agrochimique est le (9-isopropyl-1,2,3,4-tétrahydro-1,4-méthano-naphtalén-5-yl)-amide d'acide 3-difluorométhyl-1-méthyl-1H-pyrazole-4-carboxylique (représenté sur la figure 2).

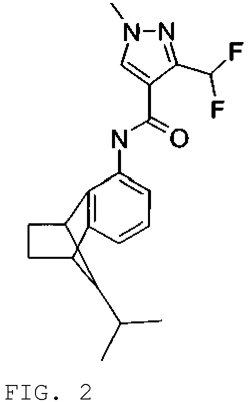

17. Composition selon la revendication précédente, comprenant 5 à 95 % de DML, 0,5 à 50 % de (9-isopropyl-1,2,3,4-tétrahydro-1,4-méthano-naphtalén-5-yl)-amide d'acide 3-difluorométhyl-1-méthyle-1H-pyrazole-4-carboxylique (figure 2) et 5 à 95 % de solvant choisi dans le groupe constitué des solvants de la revendication 4.

18. Composition selon la revendication 17, dans laquelle le solvant est choisi dans le groupe constitué des Solvesso 200ND, éther monobutylique de dipropylène glycol, diacétate de dipropylène glycol, benzoate de méthyle, benzoate de benzyle, diméthyldécanoamide, éther monométhylique de dipropylène glycol et benzoate de butyle.

19. Composition selon l'une quelconque des revendications précédentes, étant formulée sous la forme d'un concentré en émulsion (EC).

20. Procédé de fabrication d'une composition selon l'une quelconque des revendications précédentes, comprenant le mélange d'un composé de formule 1 selon la revendication 1 avec un agent biologiquement actif selon la revendication 1.

21. Procédé, à l'exclusion de procédés thérapeutiques, de lutte contre un organisme nuisible agricole comprenant l'application à l'organisme nuisible ou à une surface sur laquelle il peut être présent d'une quantité pesticide efficace d'une composition selon l'une quelconque des revendications 1 à 19.

22. Procédé selon la revendication précédente, dans lequel l'organisme nuisible est un champignon et la substance agrochimique est un fongicide.

23. Procédé selon la revendication précédente, dans lequel le fongicide a la structure représentée sur la figure 2 ((9-isopropyl-1,2,3,4-tétrahydro-1,4-méthano-naphtalén-5-yl)-amide d'acide 3-difluorométhyl-1-méthyl-1H-pyrazole-4-carboxylique).

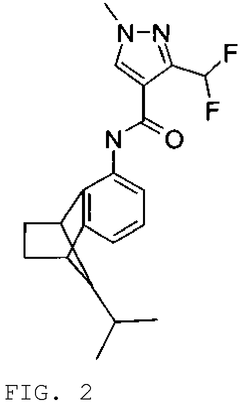

24. Utilisation d'une composition selon l'une quelconque des revendications 1 à 19 pour lutter contre un organisme nuisible pour les plantes.

25. Utilisation selon la revendication précédente, dans laquelle l'organisme nuisible est un champignon phytopathogène, le composé de formule 1 est le diméthyl-lactamide, la substance agrochimique a la structure de la figure 2 et la composition comprend un solvant choisi dans le groupe constitué des Solvesso 200ND, éther monobutylique de dipropylène glycol ou diacétate de dipropylène glycol, benzoate de méthyle, benzoate de benzyle, diméthyldécanoamide, éther monométhylique de dipropylène glycol et benzoate de butyle.
